# EUROPEAN PATENT APPLICATION

(11) **EP 1 918 869 A1**
(43) Date of publication of application: **07.05.2008**
(21) Application number: 06123402.7
(22) Date of filing: 02.11.2006
(51) Int. Cl.: G06Q 40/00

(54) **Dynamic safety balance monitoring**

(71) Applicant: ABB RESEARCH LTD., 8050 Zürich (CH)
(72) Inventor: Martinez, Robert, 1385 Asker (NO); Rolland, Elisabeth, 0551 Oslo (NO); Enkerud, Torgeir, 0575 Oslo (NO)
(74) Representative: Dahnér, Christer

(57) **Abstract**

A computer based system (48) controlling the safety of a process comprises control entities (50, 52, 56, 58, 60, 62) including at least one sensor (56, 58, 60) for measuring process properties, at least one entity property providing unit (66, 68, 72) for providing operational properties of safety entities used and a device (78) for determining the safety of the system. This device (78) obtains a number of process variables based on measured process properties in the system, determines a current quantified risk of the process, determines a quantified current safety level of safety entities (50, 52, 62) used based on operational properties of these entities, compares the risk with the safety level and generates a safety balance value corresponding to a residual risk of the process section indicative of the safety based on the comparison.

## Description

### TECHNICAL FIELD OF THE INVENTION

The present invention relates to the countering of risks and faults in an industrial process control system. The invention more particularly relates to a method, device and computer program product for determining the residual risk of a process section as well as a computer based system controlling the safety of a process.

### DESCRIPTION OF RELATED ART

Computer based control systems are widely used in a number of different industrial process environments, such as for instance pulp and paper process and oil and gas production processes and electrical power production processes. As is evident from the examples given above, these systems can thus be provided in a hazardous environment. The safety of such a system therefore has to be guaranteed and this guarantee is often a strict requirement for the process operator's license to continue production.

The generally accepted method to guarantee industrial process consists of two parts, where a first part is to identify hazards of the physical process and quantify the risk to life, environment and property presented by these hazards, and a second part is to apply a safety instrumented function (SIF) whose overall reliability is calculated and then compared with risk from the first part: only a small residual risk should remain after the comparison. This residual risk must be less than the tolerable risk which is pre-defined by the corporate or industry authorities.

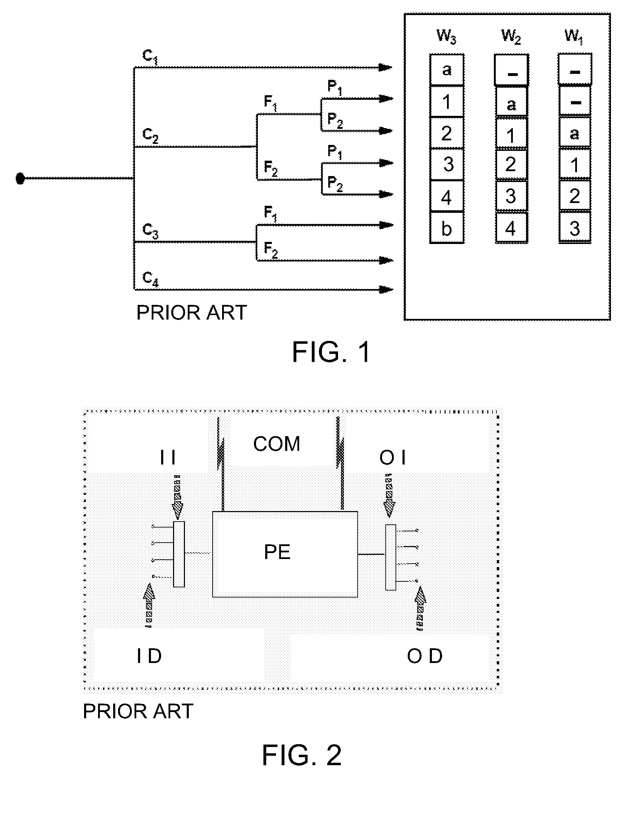

The estimation in the first part is first performed by experts during process design phase, using known hazard analysis methods such as HAZOP and Risk Graph. One such risk graph is exemplified in fig. 1. In the left side of fig. 1, the starting point is the point furthermost to the left in fig.1. In the figure C represents consequence parameters, F exposure time parameters, P the probability to avoid a hazardous event. In the right side of the figure W indicates the probability of the unwanted occurrence, "-" indicates that there are no safety requirements, a indicates that there are no specials safety requirements, 1 - 4 are different Safety Integrity Levels(SIL), and b that a single SIF is not enough. However, the risk determined in this way is static and does not consider changes of the risk..

The calculation in the second part is first performed by experts during the design phase using published device reliability and rules for calculating overall reliability, sometimes referred to as the integrity. The resulting SIF, which is shown in fig. 2, typically has a three-part structure consisting of one or more sensing input elements in the form of input interfaces I I and input devices I D, a central solver element of programmable electronics P E such as an embedded computer, and one or more final output elements in the form of output interfaces O E and output devices O D, as shown fig. 1. The entire structure is also referred to as a "safety loop". A communications links COM with the solver elements provides warning and alarm information to process operators.

Balancing risk with a reliable safety function is common practice during the design phases, but is more difficult to maintain during the entire lifecycle of the process plant. Industry safety standards require periodic review of the original design estimations and calculations and review whenever a process or equipment change is about to occur.

Changes during plant operation which impact the process risk integrity include, but are not limited to the following:
- Changing composition of raw material or fluid inputs
- Changes in pipe diameters and flow characteristics due to deposition, corrosion
- Changes in process behaviours due to weather extremes
- Complex plant dynamics which were not considered during the initial hazard analysis and only manifest during actual operation

Changes during plant operation which impact the safety function integrity include, but are not limited to the following:
- Activation exceeding original on-demand frequency estimates
- Temporary bypasses/block/inhibit conditions exceeding allowable time span
- Lack of proof-testing within prescribed interval

The state of the art safety functions have self-monitoring functionality, but this functionality does as mentioned earlier only provide a static determination of the risk.

Performing a successful review during plant operational phase is difficult in practice because of one or more of the following:
- Manual Safety lifecycle management procedures are not followed, so the required review is not undertaken when needed.
- Non-detection of changes in process behaviour which violate original assumptions for process risk, due to gradual nature of change.
- Non-detection of changes which violate original assumptions for SIF integrity, due to gradual nature of change.
- Difficulty of assembling the relevant historical process data to detect gradual change over time.
- The original process hazard experts are not present to evaluate the operational history process data
- The original process safety function experts are not present to evaluate the operational history safety function diagnostics data
- The original process hazard report and model is not available, or not in an easily usable format
- The new process risk calculation is not performed correctly for the changed process and exposure conditions
- The new SIF integrity calculation is not performed correctly for the changed safety function configuration

There is therefore a need for improvement when countering risks and faults in industrial process control systems.

### SUMMARY OF THE INVENTION

The present invention is therefore directed towards improving the safety of a plant when controlling a hazardous process.

One object of the present invention is thus to provide ways for dynamically, continually and automatically determining the residual risk of an industrial process section which is monitored and controlled by a computer based system having a safety instrumented function (SIF).

This object is according to a first aspect of the present invention achieved through a method for determining the residual risk of a process section, wherein a computer based system controls the safety of the process, comprising the steps of:
obtaining a number of process variables based on measured process properties in at least one section of the system,
determining a current quantified risk of the process at least in said section,
determining a current quantified safety level of safety entities used at least in said section based on operational properties of these entities, and
comparing the current quantified risk with the current quantified safety level and generating a safety balance value corresponding to the residual risk based on the comparison, which value is an indicator of the safety at least in the section.

Another object of the present invention is to provide a device for determining the residual risk of an industrial process section which is monitored and controlled by a computer based safety instrumented function.

This object is according to a second aspect of the present invention achieved through a device for determining the residual risk of a process section in a computer based system controlling the safety of the process and being configured to:
obtain a number of process variables based on measured process properties in at least one section of the system,
determine a current quantified risk of the process at least in said section,
determine a quantified current safety level of safety entities used at least in said section based on operational properties of these entities,
compare the current quantified risk with the current quantified safety level, and generate a safety balance value corresponding to the residual risk based on the comparison, which value is an indicator of the safety at least in the section.

Yet another object is to provide a computer based system controlling the safety of a process, which determines the residual risk of an industrial process section.

This object is according to a third aspect of the present invention achieved through a computer based system controlling the safety of a process and comprising:
control entities in at least one section of the system involved in the control and including at least one sensor for measuring process properties,
at least one entity property providing unit for providing operational properties of safety entities used in the section, and
a device for determining the safety of the system and being configured to obtain a number of process variables based on measured process properties in at least one section of the system,
determine a current quantified risk of the process at least in said section,
determine a quantified current safety level of safety entities used at least in said section based on operational properties of these entities,
compare the current quantified risk with the current quantified safety level, and
generate a safety balance value corresponding to a residual risk of the process section based on the comparison, which value is an indicator of the safety at least in the section.

Another object of the present invention is to provide a computer program product for determining the residual risk of an industrial process section which is monitored and controlled by a computer based safety instrumented function.

This object is according to a fourth aspect of the present invention achieved through a computer program product for determining the residual risk of a process section wherein a computer based system controls the safety of the process , comprising computer program code to make a computer perform when said code is loaded into said computer:
obtain a number of current process variables based on measured process properties in at least one section of the system,
determine a current quantified risk of the process at least in said section,
determine a quantified current safety level of safety entities used at least in said section based on operational properties of these entities,
compare the current quantified risk with the current quantified safety level, and generate a safety balance value corresponding to the residual risk based on the comparison, which value is an indicator of the safety at least in the section.

The invention thus determines the current integrity level of a computer based safety system and also determines the current risk level of the industrial process and then compares these aforementioned levels to determine the residual risk, also called the safety balance.

In other words, the present invention provides a method for determining the residual risk of an industrial process monitored and controlled by a SIF, comprising the steps of:
- at regular intervals obtaining current and historical measured physical values of a plant section of the industrial process
- using said data values together with the design criteria from an existing hazard and risk estimation to determine the current quantified risk level relative to the original design risk level of the process at least in said section,
- using said data values together with the design criteria of the SIF to determine the current quantified integrity level relative to the original achieved SIF integrity level at least in said section
- comparing the current relative quantified risk with the current relative quantified SIF integrity level and thus calculating the residual risk value based on the comparison, which value is an indicator of the safety at least in the section.
   According to one variation of the invention, the method also includes the step of
- at regular intervals obtaining current and historical values relating to the frequency and extent of human and/or environmental consequences, exposure and probability to potential hazards in the plant section.
   The invention according to this variation describes how historical trend data or statistical analysis for discovering changes over time can be used to provide added coverage of the integrity of the safety function.
   According to yet another variation of the invention, the method also includes the step of
- using the calculated risk and integrity values, together with the known plant-area-unit (PAU) functional hierarchy model of the plant, aggregate this data for multiple SIFs which to arrive at overall risk and integrity values for an entire Safety Instrumented System (SIS) and/or for higher levels of the PAU hierarchy.

According to this variation of the present invention the risk and integrity values for a given section are taken and aggregated to higher levels of the plant equipment hierarchy, thus providing key performance indicators for entire Safety Instrumented Systems (SIS) which can be used for plant-wide safety management.

According to another variation of the present invention operators are warned when the residual risk exceeds certain pre-defined limits. The operators can use this warning to take action to improve the safety of a plant where the process is running.

According to yet another variation of the present invention operators and maintenance personnel are informed when residual risk is lower than normal; this information may be helpful in choosing the correct time to perform needed maintenance actions on the SIF, actions which may temporarily degrade the integrity of the safety function in a plant.

According to the present invention both sides of the safety balance are monitored; the inventive concept can be performed automatically and at regular intervals by a computer program or within a device connected to the process control system. This invention differs from any existing practices for safety monitoring in that it considers both sides of the safety balance, not just the safety loop (SIF) side. The output of the safety balance method described herein is a dynamic, as opposed to the static designed residual risk. The invention also includes a means to alert the process operators when this residual risk exceeds the Tolerable Risk value.

According to the invention a complete monitoring is provided that covers the entire SIF for operating conditions which affect the components and hence the overall reliability/integrity of the SIF. The invention continually monitors conditions which include overdue proof-testing interval, bypassed SIF element and several others. The invention determines the correct formula for the new configuration of the SIF and performs the calculation continually within a computer program or device connected to the process control system.

With the present invention it is thus possible to enhance the operational safety of a system through considering both the process risk and integrity of the safety entities. When current process risk is high and safety function integrity is low, then either the operators can be immediately warned or the safety function alarm and warning limits can be lowered. Conversely, if process risk is low then operators or maintenance staff may choose to perform actions which may disturb the safety function, such as online proof-testing or even taking a redundant SIF element temporary offline for maintenance.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1,schematically shows a risk graph according to known principles,
fig. 2 schematically shows a safety integrated function according to known principles
fig. 3 shows a flow chart outlining the general method steps in a method for determining the current safety-related values of the system according to the present invention, and
fig. 4 schematically shows a simplified system where a process is controlled by a number of control entities and a device for determining the process risk and safety integrity of the system according to the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

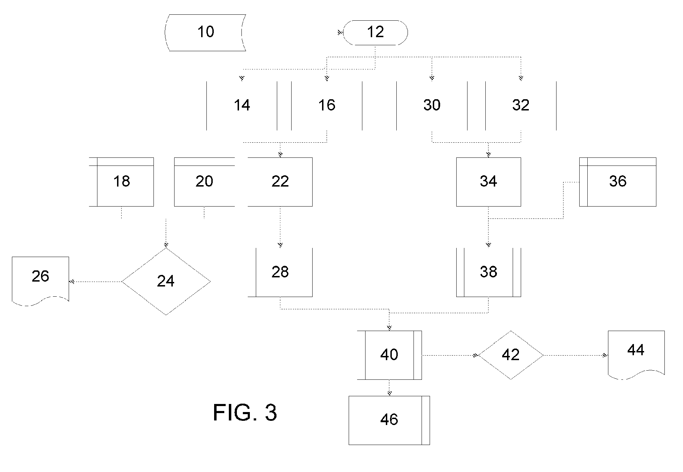

In the flowchart of fig 3 the left side shows the steps involved in Process Risk Monitoring and the right side shows the steps involved in Safety Instrumented Function (SIF) Integrity Monitoring.

The main purpose of Process Risk Monitoring is to determine if the process section protected by a SIF (or SIS) is behaving as safely as anticipated in the original hazard analysis and warn operators if not. The Risk Monitoring occurs outside the SIF's logic solver element as shown in fig. 2, thus providing continuous validation coverage of the logic solver's own process monitoring. The logic solver's process monitoring may not be as extensive as listed below; typically only current process measured values are the basis for the SIF safety actions. The logic solver may lack the entire SIF loop monitoring, or may not be able to use historical data to do meaningful risk modelling.

The flowchart describes an algorithm which is first initialised with some history logging configuration 10 to allow collection of historical data from a historian database. Other initializations include data structures which describe the models and assumptions used for the original hazard analysis and SIF design; these are a process hazard model 18, a risk graph model 20 and safety function design 36.

For the Process Risk Monitoring, these data structures may be imported from the original hazard analysis for the process section. These data structures may also include definitions of a limited number of known process states (start, run, shutting down and other known states) along with their relative risk levels. During operation, a data collection step 14 provides a process line data trend, for instance regarding different properties of the process, like temperature, pressure etc, through gathering of current and historical values for the section's process values, including trip data. A similar step 16 provides a risk graph data trend relating to the frequency and extent of human environmental and/or property consequences, like exposure and probability to potential hazards in the plant section. This may be done through gathering current and historical data on presence of staff in the process section. This data may be collected from historical work orders or other means of registering staff movements around the process section, like detecting the positions of wireless terminals associated with the staff. In step 22 the data from steps 14, 16 is used to compute limits and other statistics which are then compared in step 24 to limits in the original models, i.e. to limits obtained via a process hazard model 18 and a risk graph model 20. Severe deviations will cause a warning or provide a work order to review on or more of the models in step 26. The calculated limits and statistics 22 are furthermore subject to a recalculation of the process risk 28 through a simple numerical risk model based on known techniques such as state estimation. This step attempts to characterize the current state process and match it with the known process states defined earlier. If no match can be made and/or the process behaviour is risky, then the current risk level is increased. Optionally, this step could use signal-processing methods to cluster data and analyse these clusters for deviations. The results of the calculation are then supplied to a step 40, where a safety balance is calculated

In the flowchart of fig 3 the right side shows the steps involved in Safety Instrumented Function (SIF) Integrity Monitoring. These steps' main purpose is to determine if the SIF asset is behaving as anticipated in the original SIF design and warn operators if not. The SIF Monitor reads current and historical data 30, 32 which affects the integrity of the SIF devices and aggregates this data across the entire SIF loop. The SIF monitoring occurs in outside the SIF logic solver, thus providing continuous validation coverage of the logic solver's own device monitoring. The logic solver's device monitoring may not be as extensive as listed below and may lack the entire SIF loop perspective, or simply may not be able to use diagnostic data which is not SIL-marked. The SIF monitoring functions listed below do not result in a process trip signal and are not fed back to the logic solver as inputs to a possible trip signal.

The step 32 monitors basic (non-diagnostic) inputs which may indicate impending SIF integrity problems: These basic monitor inputs are :
- Bad Quality Check. Reports the quality status (good, bad, uncertain)
- Bool Check. Monitors a signal with two states: normal and alarm.
- Flow Delta. Monitors the difference between two numeric
- High Limit Check. Monitors a process value
- HighLow Limit Check Monitors a process value
- Low Limit Check. Monitors a process value
- Running Time Check. Monitors the accumulated runtime hours of a device
- XY Profile Deviation. Compares a two-dimensional value against a baseline function

The step 30 monitors fieldbus diagnostic data (when available) to detect dangerous failures in SIF devices. Such monitoring increases the Safe Failure Fraction (SFF) of the SIF device. For HART data:
- Device malfunction.
- Configuration changed.
- Cold start.
- More status available.
- Analog output current fixed.
- Analog Output Saturated.
- Nonprimary Variable Out of Limits.
- Primary Variable Out of Limits.

Additional monitoring parameters, include:
- forced I/O channels.
- Monitor inhibits
- Monitor overdue proof-testing (basic) which has a direct impact on SIF integrity. Basic monitoring of Running Time compared with time to next proof-test. This function also requires a user interface to allow user to reset Running Time after a proof-test or any other reason.
- Monitor overdue proof-testing (advanced). Uses feedback from maintenance system (CMMS) about proof-test work order fulfillment.
- Monitor overdue or drifting calibration which has a direct impact on SIF integrity. Basic monitoring of Running Time. Advanced function uses feedback from calibration software.
- Monitor expected final element values after planned or unplanned trips, or after trip input, to verify SIF performance, thus integrity. Requires a user interface to allow user to configure inputs and expected

The data from steps 30, 32 is used to calculate limits and other statistics 34 in order to determine the current redundancy configuration and health state of the entire SIF loop. Based on the current configuration and the original safety function design 36, the safety integrity is recalculated through selecting a correct integrity/reliability calculation and executed it in step 38.

Not shown in the flowchart, but included in this invention, is the provision of an interface for human operators to upgrade/downgrade the SIF device integrity, for example temporary bypass, manual proof-test result, or if a failure was detected by any other offline means.

In step 40 the residual risk is calculated as the difference between the current process risk level and the current SIF integrity level. An operator notification event is generated in step 44 if this residual risk exceeds a certain pre-set value 42.

The preceding steps will result in an operator notification event when SIF device integrity is severely decreased (not shown in flowchart). The step 46 aggregates the integrity value up to an entire SIS and across all branches in the plant hierarchy structure.

All the computed values for process risk are aggregated in step 46 across plant hierarchy branches, up to the Plant root node so that the aggregate process risk and safety balance at any level of the plant can be viewed.

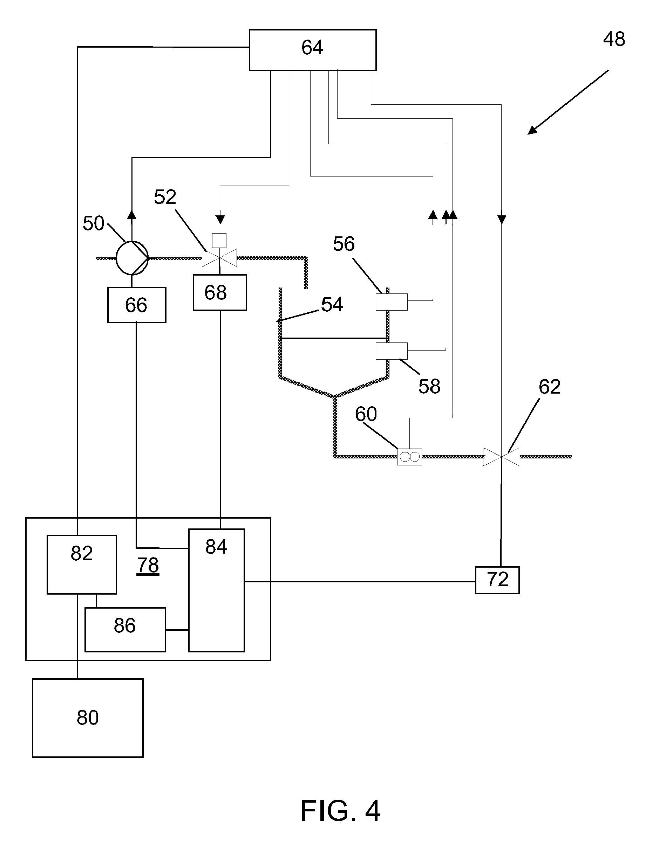

A simplified control system is shown in fig 4, in which the flowchart steps from fig 3 are performed within a device 78.

Fig. 4 schematically shows a simplified exemplifying control system 48 provided in a plant. This is just one example of a system where the invention may be implemented. It may also be implemented in a system for manufacturing of products. The system 48 may be, but is not limited to, an object based computerised system for controlling a process or perhaps part of a process. Typical processes are electrical power generation and supply process, water purification and distribution processes, oil and gas production and distribution processes, petrochemical, chemical, pharmaceutical and food production, and pulp and paper production. These are just some examples of environments where the system can be applied. In fig. 4 there is shown a controller 64 controlling a number of physical control entities involved the process. The entities may be different entities that influence the technical process, like such things as a pump, a motor, a valve etc. The entities are thus used in the system, which use may involve the entity being operated either directly through receiving control commands and/or indirectly by being subject to the influence of some other object or material or product in the process. The entities in fig. 4 are provided in a section for controlling a process or a part of a process.

In fig. 4 the controller 64 (Process Controller or Programmable Logic Controller PLC) controls a system including an inlet pipe leading to a tank 54 and an outlet pipe leaving the tank 54. In the inlet pipe there is provided a pump 50 that pumps fluid into the inlet pipe as well as a first valve 52. In the tank there are provided two level sensors 56 and 58 and in the outlet pipe there is provided a flow meter 60 and a second valve 62. All these entities are connected to the controller 64 for receiving control signals and send data. Said controller 64 receives control input values from the pump 50 and level sensors 56 and 58 and regulates the fluid level in the tank based on these control input values through controlling the first valve 52. It also receives control input values 60 from the flow meter and controls the second valve 62 for regulating the output fluid flow. The controller and the entities thus influence the process. It should here be realised that further entities may be provided for safety measures, like redundant entities, and safety providing entities like switches that turn off power to for instance a pump. Some of the control entities of fig. 4 are here also safety entities. Here the pump 50 and the two valves 52 and 62 are such safety entities as they may be controlled to regulate the process for safety purposes. A safety entity is thus an entity that influences the process for safety purposes.

In terms of the simplified SIF elements described earlier in fig. 2, the entities 56, 58, 60 are input elements, entity 64 is the logic solver and entities 52, 62 are the output elements.

Each of the safety entities are here provided with an entity property providing unit in the form of an entity property detector. Thus the pump 50 is connected to a pump property detector 66, the first valve 52 to a first valve property detector 68 and the second valve 62 to a second valve property detector 72.

In fig. 4 there is also shown a device 78 for determining the process risk and SIF integrity of the system comprising a SIF integrity determining unit 84 that is connected to all the property detectors 66, 68 and 72, a risk estimating unit 82 connected to the controller 64 for receiving physical measurement values from the process and a safety balance determining unit 86 connected to both the SIF integrity determining unit 84 and the risk estimating unit 82. The risk estimating unit 82 is also connected to a historic process variable store 80. The control entities 50 - 62 and thus also the safety entities 50, 52, 62 are here all provided in the same control loop of the system.

According to the present invention, the risk estimating unit 82 has at least one failure model that is applicable for the process being controlled by the section and in relation to this model it is configured with a number of known safe process states, where such states may be include the states start, run and shutting down. There may however exist other states. The failure model may here have been imported from an original hazard analysis provided somewhere else in the system. According to the present invention, the risk estimating unit 82 receives a number of measured process properties in the form of measurement values from the controller 64. These measured properties are obtained by the pump 50, level meters 56 and 50 and flow meter 60. Based on these received measured process properties, the risk estimating unit obtains a number of current process variables. These process variables may directly correspond to the measured process properties. However it is also possible to use these measured properties to calculate process variables. The thus obtained process variables may also be a mixture of calculated and received process variables. In this way a number of process variables are thus obtained. The risk estimating unit 82 also obtains historic process variables, i.e. the results of related previous measurements from the store 80. The risk estimating unit 82 applies all these variables, both current and historic on the failure model provided for the process. The model is here a model of the process and this means that the failure model would in this case take account of dangerous situations, like what happens if the level in the tank goes above and below the levels of the level sensors. What is done is here that the risk estimating unit 82 tries to characterise the process as being in one of the states and compares how the process variables deviate from anticipated process variable thresholds of this state, where the thresholds are obtained through the numerical model. Based on these deviations, the risk estimating unit 82 then determines a current quantified risk of the process in the section. The current risk, which is preferably provided as a certain risk level, may therefore be changed, and as an example raised, based on the number of times process variables deviate from what is expected. This risk estimating unit 82 provides a number of output signals indicating the current state, a current process risk level as well as a current deviation from an anticipated risk level, where the current process risk and deviation from an anticipated risk level both provide data that can be used as a quantified risk of the process. These output signals may all be presented for a system operator. In case the deviation from the anticipated risk is significant an alarm event may be generated that indicates that a new analysis of the hazardous event should be undertaken. This may have a consequence on the integrity levels of the safety entities (which will be described shortly) and safety integrity design of the system. The signals current process risk level and deviation from an anticipated risk level are then forwarded from the risk estimating unit 82 to the safety balance determining unit 86. The current process variables are then stored in the historic process variables store 80 and used in later risk estimations.

The entity safety level determining unit 84 receives the status of the safety entities, i.e. operational property data regarding the entities 50, 52 and 62 in the section via the property detectors 66, 68 and 72. In this way the entity safety level determining unit 84 receives operational property data regarding all safety entities involved in the control loop. The operational properties that are detected can be the properties, by-passed, removed, in fault mode, not proof tested etc. It then determines a quantified current safety level of all safety entities in the section. The level comprises a combination of individual SIL (Safety Integrity Level) values of separate entities involved in the control loop. In case an individual SIL value indicates that the corresponding control entity is degraded, this influences the quantified current safety level and then normally in a negative direction. An individual value may here indicate degradation because an entity is bypassed, removed, in fault mode, not proof tested etc. The quantified current safety level is then also provided to the safety balance determining unit 86.

The safety balance determining unit 86 then compares the current risk level with the current safety level, where weighting may be applied in the comparison, and generates a safety balance value. The safety balance value indicates the difference between the risk level and the safety level. The safety balance value will according to the present invention be low in case the risk is normal and in case the safety is normal. This means that it will be high if the process risk level is raised or if the integrity level is lowered. The safety balance value will therefore be even higher if the risk is raised and the current safety level is lowered. If the safety balance value is above a certain threshold associated with either a high risk or a low safety level, an alarm is generated. If the safety balance value is below the threshold, indicating a normal state no alarm is generated. In either case, irrespective of if an alarm is generated or not, the method returns and yet again obtains current process variables.

After an alarm has been generated a process operator may decide to do something about the process, like for instance shut it down or in some other way force the process in a safe direction. In this regard a process operator may also be informed that tuning or changes to the parameters of the failure model may be needed. It is here also possible to provide more than one threshold, where a first detects the situation where either the risk is raised or the safety level is lowered, while a second threshold detects the situation where both the risk is raised and the safety level is lowered. This can be used to indicate different degrees of severity. In this way the safety balance of the system is continually determined in real-time. It should here be realised that the deviation from the anticipated risk could be used as well in the comparison, either instead of or in addition to the current risk level.

With the present invention it is possible to enhance the safety of a system through considering both the process risk and integrity of the safety entities. This furthermore reduces the down time of the system, since problems may be encountered and corrected faster than in known systems.

The principles mentioned above are not limited to a certain section, which is preferably one control loop, but can be applied on several different sections as well as on higher levels up to the plant root node. It is thus possible to provide current process risk and entity integrity for several layers. In this way it is possible to determine an overall safety balance as well as safety balances for different levels and different sections of a level. This simplifies the determination of when and where actions are to be performed in case the plant safety is endangered.

It is according ot the present invention possible that a complex statistical clustering is used during the risk estimation. Such a complex clustering allows an anticipation of a dangerous development before a process variable reaches a threshold or a SIF alarm is reached.

The device for determining the safety of the system was in the description made above provided in relation to the field bus level of a system, where a controller and the entities are field devices. It should however be realised that it may just as well be provided in a higher level of the system as long as it can access the data necessary for determining a safety balance. It is therefore possible that the property detectors are not needed. The information can then be provided by another type of entity property providing unit, like a database of the system that is kept by system operators. Data can then also be clustered for different sections and levels.

The device for determining the safety of the system may be provided in a computer, which may be a server. The different units of this device may here be implemented through one or more processors together with computer program code for performing its functions. The program code mentioned above may also be provided as a computer program product, for instance in the form of one or more data carriers carrying computer program code for performing the functionality of the present invention when being loaded into the computer. The computer program code can furthermore be provided as pure program code on an external server and downloaded to the device for determining the safety of the system.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. Method for determining the residual risk of a process section, wherein a computer based system (48) controls the safety of the process, comprising the steps of:
obtaining (14) a number of process variables based on measured process properties in at least one section of the system,
determining (28) a current quantified risk of the process at least in said section, determining (38) a current quantified safety level of safety entities (50, 52, 62) used at least in said section based on operational properties of these entities, and
comparing (40) the current quantified risk with the current quantified safety level and generating a safety balance value corresponding to the residual risk based on the comparison, which value is an indicator of the safety at least in the section.

2. Method according to claim 1, wherein the process variables comprise current and historical process variables.

3. Method according to claim 1 or 2, further comprising the step of obtaining (16) a number of current and historical risk graph variables concerning human, environmental and/or property consequences.

4. Method according to claim 3, wherein risk graph variables concerning humans are based on records of presence of people near at least one section of the system.

5. Method according to any previous claim, wherein the determining of a current quantified risk comprises applying (14) obtained variables in a risk model for the process and basing the determination of the current quantified risk on how these process variables deviate from anticipated process variable thresholds.

6. Method according to claim 5, wherein the step of applying process variables in a risk model comprises the step of characterising the process as being in a known state and basing the determination of the current quantified risk on how the process variables deviate from anticipated process variable thresholds of this state.

7. Method according to claim 5 or 6, further comprising the step of clustering process variables and analysing these clusters for deviations from anticipated cluster thresholds.

8. Method according to claim 7, wherein the process variables are clustered for several levels of safety entities in the network and the steps of determining a current quantified risk of the process, determining a quantified current safety level, comparing the risk with the safety level and generating a safety balance value are performed for all these levels.

9. Method according any previous claim, wherein the step of determining a current quantified safety level of safety entities in the section comprises changing the level from a normal level if the operational property of at least one entity indicates that it is degraded.

10. Method according to claim 9, further comprising the step of generating an alarm if the safety balance value exceeds a safety balance threshold.

11. Method according to claim 10, wherein the threshold is exceeded if the current quantified risk deviates from an anticipated risk but the current safety level is normal.

12. Method according claim 9 or 10, wherein the threshold is exceeded if the current quantified risk corresponds to an anticipated risk but the current safety level deviates from the normal level.

13. Device (78) for determining the residual risk of a process section in a computer based system (48) controlling the safety of the process and being configured to:
obtain a number of process variables based on measured process properties in at least one section of the system,
determine a current quantified risk of the process at least in said section, determine a quantified current safety level of safety entities (50, 52, 62) used at least in said section based on operational properties of these entities, compare the current quantified risk with the current quantified safety level, and
generate a safety balance value corresponding to the residual risk based on the comparison, which value is an indicator of the safety at least in the section.

14. Device according to claim 13, wherein the process variables comprise current and historical process variables.

15. Device according to claim 13 or 14, being further configured to obtain a number of current and historical risk graph variables concerning human environmental and/or property consequences.

16. Device according to claim 15, wherein risk graph variables concerning humans are based on records of presence of people near at least one section of the system.

17. Device according to any of claims 13 - 16, which when being configured to determine a current quantified risk is configured to apply historic and current process variables in a failure model for the process and base the determination of the current quantified risk on how these process variables deviate from anticipated process variable thresholds.

18. Device according to claim 17, further comprising a historic process variable store (80), from which historic process variables are fetched.

19. Device according to claim 17 or 18, which when being configured to apply process variables in a failure model is configured to characterise the process as being in a known safe state and base the determination of the current quantified risk on how the process variables deviate from anticipated process variable thresholds of this state.

20. Device according to claim any of claims 13 - 19, being further configured to cluster process variables and analyse these clusters for deviations from anticipated cluster thresholds.

21. Device according to claim 20, wherein the process variables are clustered for several levels of safety entities in the network and where the device is configured to determine a current quantified risk of the process, compare the risk with the safety level and generate a safety balance value for all these levels.

22. Device according to any of claims 13 - 21, which when being configured to determine a current quantified safety level of safety entities in the section is configured to change the level from a normal level if the operational property of at least one entity indicates that it is degraded.

23. Device according to claim 22, being further configured to generate an alarm if the safety balance value exceeds a safety balance threshold.

24. Device according to claim 23, wherein the threshold is exceeded if the current quantified risk deviates from an anticipated risk but the current safety level is normal.

25. Device according to claim 23 or 24, wherein the threshold is exceeded if the current quantified risk corresponds to an anticipated risk but the current safety level deviates from the normal level.

26. Device according to any of claims 13 -25, further comprising at least one sensor (56,58, 60) for measuring process properties in at least one section.

27. Device according to any of claims 13-26, further comprising at least one entity property providing unit (66, 68, 72) for providing operational properties of safety entities used in the section.

28. Computer based system (48) controlling the safety of a process and comprising:
control entities (50, 52, 56, 58, 60, 62) in at least one section of the system involved in the control and including at least one sensor (56, 58, 60) for measuring process properties,
at least one entity property providing unit (66, 68, 72) for providing operational properties of safety entities used in the section, and
a device (78) for determining the safety of the system and being configured to obtain a number of process variables based on measured process properties in at least one section of the system, determine a current quantified risk of the process at least in said section, determine a quantified current safety level of safety entities (50, 52, 62) used at least in said section based on operational properties of these entities,
compare the current quantified risk with the current quantified safety level, and
generate a safety balance value corresponding to a residual risk of the process section based on the comparison, which value is an indicator of the safety at least in the section.

29. Computer program product for determining the residual risk of a process section wherein a computer based system (48) controls the safety of the process , comprising computer program code to make a computer (78) perform when said code is loaded into said computer:
obtain a number of current process variables based on measured process properties in at least one section of the system,
determine a current quantified risk of the process at least in said section, determine a quantified current safety level of safety entities (50, 52, 62) used at least in said section based on operational properties of these entities, compare the current quantified risk with the current quantified safety level, and
generate a safety balance value corresponding to the residual risk based on the comparison, which value is an indicator of the safety at least in the section.
